# EUROPEAN PATENT APPLICATION

(11) **EP 3 346 653 A1**
(43) Date of publication of application: **11.07.2018**
(21) Application number: 16848093.7
(22) Date of filing: 20.09.2016
(51) Int. Cl.: H04L 25/02

(54) **METHOD AND DEVICE FOR PILOT FREQUENCY DISTRIBUTION**

(30) Priority: 25.09.2015 CN 201510624070
(71) Applicant: Huawei Technologies Co., Ltd., Longgang District Shenzhen, Guangdong 518129 (CN)
(72) Inventor: HUANG, Hui, Shenzhen Guangdong 518129 (CN); QIAN, Fengyong, Shenzhen Guangdong 518129 (CN); ZHAN, Qicong, Shenzhen Guangdong 518129 (CN); FANG, Dongmei, Shenzhen Guangdong 518129 (CN); XU, Heng, Shenzhen Guangdong 518129 (CN)
(74) Representative: Körber, Martin Hans
(86) International application number: PCT/CN2016/099464
(87) International publication number: WO 2017/050212

(57) **Abstract**

The present invention discloses a pilot allocation method and apparatus, and relates to the field of wireless communications technologies, so as to resolve a problem that relatively strong pilot interference is generated between users on which MUBF pairing is performed. In the embodiments of the present invention, a base station determines user equipments UEs requiring multi-user beam forming MUBF pairing and to-be-allocated ports, sets a quantity of orthogonal cover codes OCCs according to a quantity of the to-be-allocated ports, and determines a pilot allocation result according to the quantity of the to-be-allocated ports, the quantity of the OCCs, and a quantity of the UEs. The solutions provided in the embodiments of the present invention are applicable to pilot allocation.

## Description

This application claims priority to Chinese Patent Application No. 201510624070.9, filed with the Chinese Patent Office on September 25, 2015 and entitled "PILOT ALLOCATION METHOD AND APPARATUS", which is incorporated herein by reference in its entirety.

### TECHNICAL FIELD

The present invention relates to the field of wireless communications technologies, and in particular, to a pilot allocation method and apparatus.

### BACKGROUND

A MIMO (Multi-input Multi-output, multiple-input multiple-output) technology is considered as one of key technologies in a future wireless communications system, and the MIMO is evolving into Massive MIMO having more antennas. To improve a network capacity and a cell throughput, MUBF (Multi-User Beam Forming, multi-user beam forming) may be used in a Massive MIMO system to share a same time-frequency resource for data of multiple downlink users. Because multiple users need to share a same time-frequency resource, paired users need to perform channel estimation by using different pilots. A pilot is classified into an orthogonal pilot and a pseudo-orthogonal pilot. The orthogonal pilot sends a pilot signal by using different ports, and the pseudo-orthogonal pilot sends a pilot signal by using a same port and different pseudo random sequences.

Currently, in the Massive MIMO system, only two pilot ports can be used during MUBF pairing, that is, DRS (UE-specific Reference Signal, UE-specific demodulation reference signal) pilot allocation for MUBF of a maximum of four users is supported. However, with an increasing quantity of antennas, MUBF pairing for a maximum of four streams restricts a further increase of a wireless network capacity. To resolve a problem of insufficient pilot allocation for MUBF pairing of more streams, in the prior art, a same pilot signal is used for a user having a relatively high spatial dimension distinction degree by using a spatial multiplexing technology for a DRS pilot, so that MUBF pairing for at least four streams is implemented.

However, because some users need to share a same pilot signal when a quantity of MUBF pairing users exceeds 4, relatively strong pilot interference is generated between users in a cell.

### SUMMARY

Embodiments of the present invention provide a pilot allocation method and apparatus, so as to resolve a problem that relatively strong pilot interference is generated between users on which MUBF pairing is performed.

To achieve the foregoing objective, the following technical solutions are used in the embodiments of the present invention:

According to a first aspect, an embodiment of the present invention provides a pilot allocation method, including:
determining, by a base station, UEs requiring MUBF pairing and to-be-allocated ports, where the to-be-allocated ports include two original pilot ports used for MUBF pairing and at least one newly-added pilot port used for MUBF pairing;
setting, by the base station, a quantity of orthogonal cover codes OCCs according to a quantity of the to-be-allocated ports; and
determining, by the base station, a pilot allocation result according to the quantity of the to-be-allocated ports, the quantity of the OCCs, and a quantity of the UEs.

With reference to the first aspect, in a first possible embodiment, the base station includes downlink control information DCI, where the DCI includes a first field used to carry N_{SCID} and a second field used to carry to-be-allocated port number information having at least two bits, and the N_{SCID} is a pseudo random sequence generation seed of the to-be-allocated ports;
after the determining, by the base station, a pilot allocation result according to the quantity of the to-be-allocated ports, the quantity of the OCCs, and a quantity of the UEs, the method further includes:
setting, by the base station, the N_{SCID} in the first field of the DCI according to the pilot allocation result, setting the to-be-allocated port number information in the second field of the DCI, and sending the DCI to the UEs.

With reference to the first aspect or the first possible embodiment of the first aspect, in a second possible embodiment, the determining, by the base station, a pilot allocation result according to the quantity of the to-be-allocated ports, the quantity of the OCCs, and a quantity of the UEs includes:
allocating, by the base station, a resource element RE resource to the to-be-allocated ports according to the quantity of the OCCs and the quantity of the to-be-allocated ports, where the quantity of the OCCs is a quantity of to-be-allocated ports that may occupy an RE resource at a same location;
when the quantity of the UEs is less than or equal to a first preset value, determining, by the base station, that the pilot allocation result is that each UE is corresponding to one to-be-allocated port, and N_{SCID} values corresponding to each to-be-allocated port are the same; and
when the quantity of the UEs is greater than the first preset value, and is less than or equal to a second preset value, determining, by the base station, that the pilot allocation result is that each to-be-allocated port is corresponding to one or two UEs, where
when each to-be-allocated port is corresponding to one UE, N_{SCID} values of each to-be-allocated port are the same, and
when each to-be-allocated port is corresponding to two UEs, N_{SCID} values of the same to-be-allocated port corresponding to the two UEs are different.

With reference to the second possible embodiment of the first aspect, in a third possible embodiment, the quantity of the OCCs is 4, the quantity of the to-be-allocated ports is 4, and the determining, by the base station, a pilot allocation result according to the quantity of the to-be-allocated ports, the quantity of the OCCs, and a quantity of the UEs includes:
allocating, by the base station, an RE resource at a first location to the to-be-allocated ports according to the OCCs;
when the quantity of the UEs is less than or equal to 4, determining, by the base station, that the pilot allocation result is that each UE is corresponding to one to-be-allocated port, and N_{SCID} values corresponding to each to-be-allocated port are all 1 or are all 0; and
when the quantity of the UEs is greater than 4, and is less than or equal to 8, determining, by the base station, that the pilot allocation result is that each to-be-allocated port is corresponding to one or two UEs, where
when each to-be-allocated port is corresponding to one UE, N_{SCID} values of each to-be-allocated port are all 1 or are all 0, and
when each to-be-allocated port is corresponding to two UEs, N_{SCID} values of the same to-be-allocated port corresponding to the two UEs are respectively 0 and 1.

With reference to the second possible embodiment of the first aspect, in a fourth possible embodiment, the quantity of the OCCs is 4, the quantity of the to-be-allocated ports is 8, and the determining, by the base station, a pilot allocation result according to the quantity of the newly-added to-be-allocated ports, the quantity of the OCCs, and a quantity of the UEs includes:
allocating, by the base station, an RE resource at a first location to four to-be-allocated ports of the eight to-be-allocated ports according to the OCCs, and allocating an RE resource at a second location to other four to-be-allocated ports;
when the quantity of the UEs is less than or equal to 8, determining, by the base station, that the pilot allocation result is that each UE is corresponding to one to-be-allocated port, and N_{SCID} values corresponding to each to-be-allocated port are all 1 or are all 0; and
when the quantity of the UEs is greater than 8, and is less than or equal to 16, determining, by the base station, that the pilot allocation result is that each to-be-allocated port is corresponding to one or two UEs, where
when each to-be-allocated port is corresponding to one UE, N_{SCID} values of each to-be-allocated port are all 1 or are all 0, and
when each to-be-allocated port is corresponding to two UEs, N_{SCID} values of the same to-be-allocated port corresponding to the two UEs are respectively 0 and 1.

According to a second aspect, an embodiment of the present invention provides a pilot allocation apparatus, where the apparatus includes:
a determining unit, configured to determine UEs requiring MUBF pairing and to-be-allocated ports, where the to-be-allocated ports include two original pilot ports used for MUBF pairing and at least one newly-added pilot port used for MUBF pairing; and
a setting unit, configured to set a quantity of orthogonal cover codes OCCs according to a quantity of the to-be-allocated ports, where
the determining unit is further configured to determine a pilot allocation result according to the quantity of the to-be-allocated ports, the quantity of the OCCs, and a quantity of the UEs.

With reference to the second aspect, in a first possible embodiment, the base station includes downlink control information DCI, where the DCI includes a first field used to carry N_{SCID} and a second field used to carry to-be-allocated port number information having at least two bits, and the N_{SCID} is a pseudo random sequence generation seed of the to-be-allocated ports; and the apparatus further includes a sending unit, where
the sending unit is configured to: set the N_{SCID} in the first field of the DCI according to the pilot allocation result, set the to-be-allocated port number information in the second field of the DCI, and send the DCI to the UEs.

With reference to the second aspect or the first possible embodiment of the second aspect, in a second possible embodiment, the determining unit is further configured to: allocate a resource element RE resource to the to-be-allocated ports according to the quantity of the OCCs and the quantity of the to-be-allocated ports, where the quantity of the OCCs is a quantity of to-be-allocated ports that may occupy an RE resource at a same location; when the quantity of the UEs is less than or equal to a first preset value, determine that the pilot allocation result is that each UE is corresponding to one to-be-allocated port, and N_{SCID} values corresponding to each to-be-allocated port are the same; and when the quantity of the UEs is greater than the first preset value, and is less than or equal to a second preset value, determine that the pilot allocation result is that each to-be-allocated port is corresponding to one or two UEs, where when each to-be-allocated port is corresponding to one UE, N_{SCID} values of each to-be-allocated port are the same, and when each to-be-allocated port is corresponding to two UEs, N_{SCID} values of the same to-be-allocated port corresponding to the two UEs are different.

With reference to the second possible embodiment of the second aspect, in a third possible embodiment, the quantity of the OCCs is 4, the quantity of the to-be-allocated ports is 4, and
the determining unit is further configured to: allocate an RE resource at a first location to the to-be-allocated ports according to the OCCs; when the quantity of the UEs is less than or equal to 4, determine that the pilot allocation result is that each UE is corresponding to one to-be-allocated port, and N_{SCID} values corresponding to each to-be-allocated port are all 1 or are all 0; and when the quantity of the UEs is greater than 4, and is less than or equal to 8, determine that the pilot allocation result is that each to-be-allocated port is corresponding to one or two UEs, where when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.

With reference to the second possible embodiment of the second aspect, in a fourth possible embodiment, the quantity of the OCCs is 4, the quantity of the to-be-allocated ports is 8, and
the determining unit is further configured to: allocate an RE resource at a first location to four to-be-allocated ports of the eight to-be-allocated ports according to the OCCs, and allocate an RE resource at a second location to other four to-be-allocated ports; when the quantity of the UEs is less than or equal to 8, determine that the pilot allocation result is that each UE is corresponding to one to-be-allocated port, and N_{SCID} values corresponding to each to-be-allocated port are all 1 or are all 0; and when the quantity of the UEs is greater than 8, and is less than or equal to 16, determine that the pilot allocation result is that each to-be-allocated port is corresponding to one or two UEs, where when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.

According to the pilot allocation method and apparatus in the embodiments of the present invention, the base station determines the UEs requiring the MUBF pairing and the to-be-allocated ports, where the to-be-allocated ports may include the newly-added pilot port, then sets the quantity of the OCCs according to the quantity of the to-be-allocated ports, and further determines the pilot allocation result according to the quantity of the to-be-allocated ports, the quantity of the OCCs, and the quantity of the UEs. Compared with the prior art in which when a quantity of users exceeds 4, different users use a same signal in a spatial multiplexing manner, causing strong pilot interference, in the embodiments of the present invention, the newly-added port may also occupy, by setting the quantity of the OCCs, an RE resource used for pilot allocation, so that a quantity of pilot ports that may be allocated to the UEs is increased, different users may use different pilot ports, and pilot interference between the UEs is reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a pilot allocation method according to an embodiment of the present invention;
FIG. 2 is a flowchart of another pilot allocation method according to an embodiment of the present invention;
FIG. 3 is a flowchart of another pilot allocation method according to an embodiment of the present invention;
FIG. 4 is a schematic diagram of allocation of an RE resource in a pilot allocation method according to an embodiment of the present invention;
FIG. 5 is a schematic diagram of allocation of another RE resource in a pilot allocation method according to an embodiment of the present invention;
FIG. 6 is a schematic diagram of a logical structure of a pilot allocation apparatus according to an embodiment of the present invention;
FIG. 7 is a schematic diagram of a logical structure of another pilot allocation apparatus according to an embodiment of the present invention; and
FIG. 8 is a schematic diagram of a logical structure of a base station in a pilot allocation method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

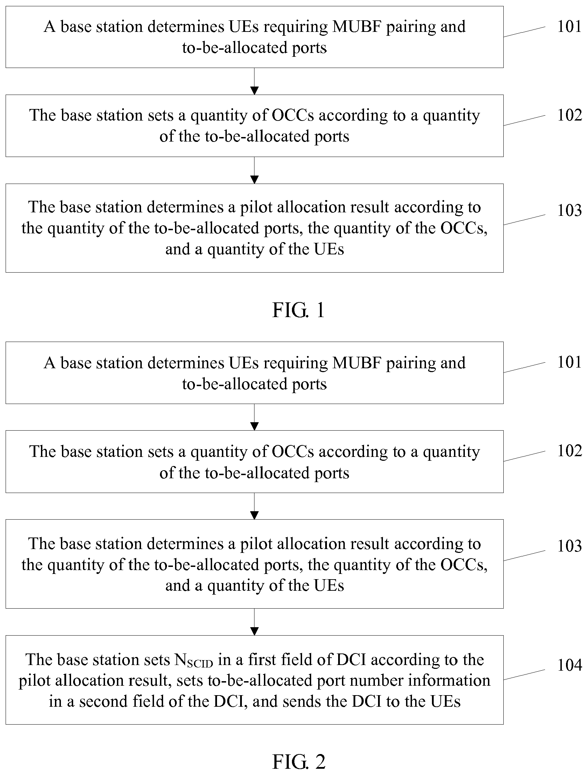

To reduce pilot interference between UEs (User Equipment, user equipment), an embodiment of the present invention provides a pilot allocation method. The method is applied to a Massive MIMO system, and the Massive MIMO system includes a base station, UEs requiring MUBF pairing, two original pilot ports used for MUBF pairing, and at least one newly-added pilot port used for MUBF pairing. As shown in FIG. 1, the method includes the following steps.

101. A base station determines UEs requiring MUBF pairing and to-be-allocated ports.

The to-be-allocated ports include at least two original pilot ports used for MUBF pairing, and may further include a newly-added pilot port used for MUBF pairing. The MUBF pairing is to pair at least two UEs, so that the at least two UEs share a same time-frequency resource.

For example, the 3GPP (3rd Generation Partnership Project, 3rd Generation Partnership Project) LTE (Long Term Evolution, Long Term Evolution) protocol stipulates that only two pilot ports, a port (port) 7 and a port 8, can be used when MUBF pairing is performed in a TM (Transmission Mode, transmission mode) 8/a TM 9. Usually, UEs on which MUBF pairing is not performed may use eight ports from a port 9 to a port 13. However, in this embodiment of the present invention, UEs may also use these ports from the port 9 to the port 13 when MUBF pairing is performed.

102. The base station sets a quantity of OCCs (Orthogonal Cover Code, orthogonal cover code) according to a quantity of the to-be-allocated ports.

It should be noted that, ports occupying an RE resource at a same location are distinguished by using different OCC codes. For example, both the port 7 and the port 8 occupy an RE resource at a first location, and an OCC code corresponding to the port 7 and an OCC code corresponding to the port 8 are different.

In addition, when the quantity of the to-be-allocated ports is less than 4, the quantity of the OCCs and the quantity of the to-be-allocated ports are the same. For example, when the quantity of the to-be-allocated ports is 4, the quantity of the OCCs may be set to 4, and different OCC codes may be respectively set for the four to-be-allocated ports, so that the four to-be-allocated ports occupy an RE resource at a same location.

Generally, the quantity of the OCCs does not exceed 4. When the quantity of the to-be-allocated ports exceeds 4, at least one group of available RE (Resource Element, resource element) resources may be newly added for the to-be-allocated ports, so that a maximum of the four to-be-allocated ports occupy an RE resource at a same location.

It may be understood that, when the quantity of the OCCs is 2, an RE resource at a same location may be occupied by two different ports. When the quantity of the OCCs is 4, an RE resource at a same location may be occupied by four different ports. Because the quantity of the OCCs is permanently set to 2 in the prior art, an RE resource at a same location can be used by only two ports. In this embodiment of the present invention, an RE resource at a same location may be used by more ports by setting the quantity of the OCCs, and the newly-added pilot port may also be used for MUBF pairing between the UEs.

103. The base station determines a pilot allocation result according to the quantity of the to-be-allocated ports, the quantity of the OCCs, and a quantity of the UEs.

According to the pilot allocation method in this embodiment of the present invention, the base station determines the UEs requiring the MUBF pairing and the to-be-allocated ports, where the to-be-allocated ports may include the newly-added pilot port, then sets the quantity of the OCCs according to the quantity of the to-be-allocated ports, and further determines the pilot allocation result according to the quantity of the to-be-allocated ports, the quantity of the OCCs, and the quantity of the UEs. Compared with the prior art in which when a quantity of users exceeds 4, different users use a same signal in a spatial multiplexing manner, causing strong pilot interference, in this embodiment of the present invention, the newly-added port may also occupy, by setting the quantity of the OCCs, an RE resource used for pilot allocation, so that a quantity of pilot ports that may be allocated to the UEs is increased, different users may use different pilot ports, and pilot interference between the UEs is reduced.

After determining the pilot allocation result, the base station further needs to notify the UEs of the pilot allocation result, so that the UEs perform channel estimation. Based on this, in another implementation according to this embodiment of the present invention, the base station includes DCI (Downlink Control Information, downlink control information). The DCI includes a first field used to carry N_{SCID} and a second field used to carry to-be-allocated port number information having at least two bits, and the N_{SCID} is a pseudo random sequence generation seed of the to-be-allocated ports. As shown in FIG. 2, after the foregoing step 103, step 104 is further included.

104. The base station sets the N_{SCID} in the first field of the DCI according to the pilot allocation result, sets the to-be-allocated port number information in the second field of the DCI, and sends the DCI to the UEs.

A bit that is used to send a port number and that is in the second field of the DCI is determined according to the quantity of the to-be-allocated ports. For example, when the quantity of the to-be-allocated ports is 8, three bits may be used, and 000, 001, ..., III are used to respectively represent the eight to-be-allocated ports.

It may be understood that, when the pilot allocation result is that a port 11 is allocated to a UE 1, and the N_{SCID} is 0, in the DCI sent to the UE 1, the first field is 0, and the second field is 100, so that the UE determines an allocated port and N_{SCID} by reading the DCI.

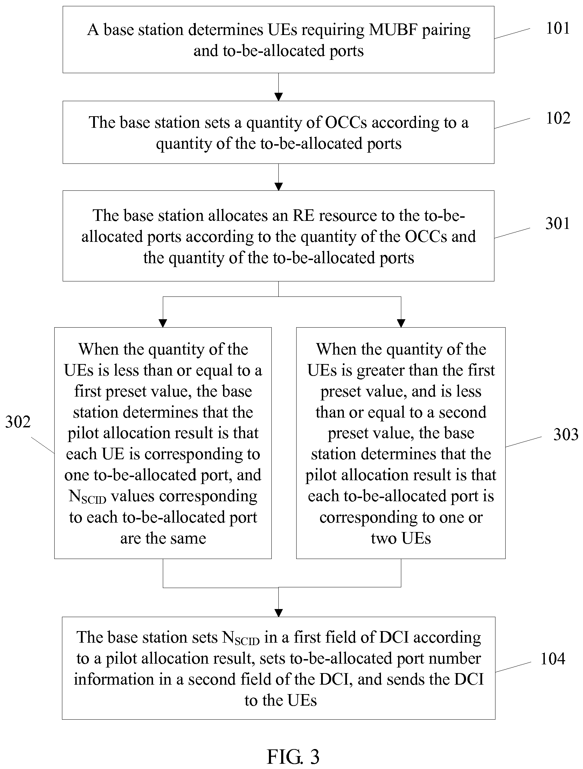

In another implementation according to this embodiment of the present invention, as shown in FIG. 3, the foregoing step 103 in which the base station determines a pilot allocation result according to the quantity of the to-be-allocated ports, the quantity of the OCCs, and a quantity of the UEs may be specifically implemented as step 301 to step 303.

301. The base station allocates an RE resource to the to-be-allocated ports according to the quantity of the OCCs and the quantity of the to-be-allocated ports.

The quantity of the OCCs is a quantity of to-be-allocated ports that may occupy an RE resource at a same location.

It should be noted that, when the quantity of the to-be-allocated ports is less than or equal to the quantity of the OCCs, an RE resource at a same location may be allocated to the to-be-allocated ports, and different OCCs are used to distinguish the to-be-allocated ports that occupy the RE resource at the same location; when the quantity of the to-be-allocated ports is greater than the quantity of the OCCs, an RE resource at a first location is allocated to to-be-allocated ports whose quantity is the same as the quantity of the OCCs, and if in this case, a quantity of remaining to-be-allocated ports is less than or equal to the quantity of the OCCs, an RE resource at a second location is allocated to the remaining to-be-allocated ports.

It should be further noted that, the to-be-allocated ports can be allocated to the UEs for use only after the RE resource is allocated to the to-be-allocated ports.

302. When the quantity of the UEs is less than or equal to a first preset value, the base station determines that the pilot allocation result is that each UE is corresponding to one to-be-allocated port, and N_{SCID} values corresponding to each to-be-allocated port are the same.

303. When the quantity of the UEs is greater than the first preset value, and is less than or equal to a second preset value, the base station determines that the pilot allocation result is that each to-be-allocated port is corresponding to one or two UEs.

When each to-be-allocated port is corresponding to one UE, N_{SCID} values of each to-be-allocated port are the same.

When each to-be-allocated port is corresponding to two UEs, N_{SCID} values of the same to-be-allocated port corresponding to the two UEs are different.

An antenna 16T16R is used as an example. In the prior art, when MUBF pairing is performed in an LTE downlink TM 8, only two pilot ports, a port 7 and a port 8, can be used, and the quantity of the OCCs is 2. Therefore, a maximum of four groups of pilots may be supported, that is, port 7 N_{SCID} = 0, port 8 N_{SCID} = 0, port 7 N_{SCID} = 1, and port 8 N_{SCID} = 1.

At least two implementations are included in this embodiment of the present invention.

In a first implementation, the quantity of the OCCs is 4, and the quantity of the to-be-allocated ports is 4.

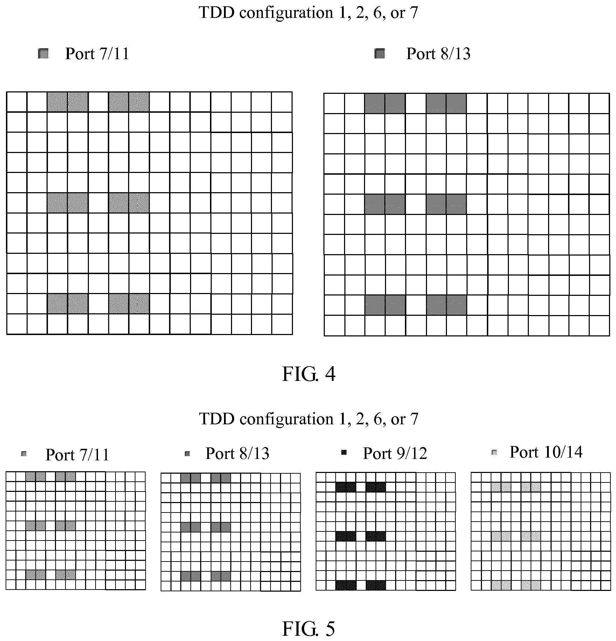

The to-be-allocated ports include original to-be-allocated ports, a port 7 and a port 8, and newly-added to-be-allocated ports, a port 11 and a port 13. The four to-be-allocated ports occupy REs in 12 DRSs in one timeslot. As shown in FIG. 4, FIG. 4 shows an example in which a TDD configuration is 1, 2, 6, or 7, where a shaded part represents an RE resource occupied by the to-be-allocated ports. The port 7, the port 8, the port 11, and the port 13 occupy an RE resource at a same location, and the to-be-allocated ports that occupy the RE resource at the same location are distinguished by using different OCC mapping sequences. An OCC mapping sequence corresponding to each to-be-allocated port is shown in Table 1.

**Table 1**

| **To-be-allocated port number** | **OCC mapping sequence** |
|---|---|
| 7 | [+1 +1 +1 +1] |
| 8 | [+1 -1 +1 -1] |
| 11 | [+1 +1 -1 -1] |
| 13 | [+1 -1 -1 +1] |

When the quantity of the UEs is less than or equal to 4, the base station determines that the pilot allocation result is that each UE is corresponding to one to-be-allocated port, and N_{SCID} values corresponding to each to-be-allocated port are all 1 or are all 0.

It should be noted that, because the quantity of the to-be-allocated ports is the same as the quantity of the UEs, or the quantity of the to-be-allocated ports is greater than the quantity of the UEs, a pseudo-orthogonal pilot does not need to be used when MUBF pairing is performed on the UEs. That the quantity of the UEs is 4 is used as an example, and two pilot allocation results may be determined, as shown in Table 2 and Table 3.

**Table 2**

| UE number | 1 | 2 | 3 | 4 |
|---|---|---|---|---|
| To-be-allocated port number | 7 | 8 | 11 | 13 |
| N_{SCID} | 0 | 0 | 0 | 0 |

**Table 3**

| UE number | 1 | 2 | 3 | 4 |
|---|---|---|---|---|
| To-be-allocated port number | 7 | 8 | 11 | 13 |
| N_{SCID} | 1 | 1 | 1 | 1 |

When the quantity of the UEs is greater than 4, and is less than or equal to 8, the base station determines that the pilot allocation result is that each to-be-allocated port is corresponding to one or two UEs.

When each to-be-allocated port is corresponding to one UE, N_{SCID} values of each to-be-allocated port are all 1 or are all 0.

When each to-be-allocated port is corresponding to two UEs, N_{SCID} values of the same to-be-allocated port corresponding to the two UEs are respectively 0 and 1.

It should be noted that, because the quantity of the to-be-allocated ports is less than the quantity of the UEs, the pseudo-orthogonal pilot needs to be used when MUBF pairing is performed on the UEs. That the quantity of the UEs is 8 is used as an example, and two pilot allocation results may be determined, as shown in Table 4 and Table 5.

**Table 4**

| UE number | 1 | 2 | 3 | 4 | 5 | 6 | 7 | 8 |
|---|---|---|---|---|---|---|---|---|
| To-be-allocated port number | 7 | 8 | 11 | 13 | 7 | 8 | 11 | 13 |
| N_{SCID} | 0 | 0 | 0 | 0 | 1 | 1 | 1 | 1 |

**Table 5**

| UE number | 1 | 2 | 3 | 4 | 5 | 6 | 7 | 8 |
|---|---|---|---|---|---|---|---|---|
| To-be-allocated port number | 7 | 7 | 8 | 8 | 11 | 11 | 13 | 13 |
| N_{SCID} | 0 | 1 | 0 | 1 | 0 | 1 | 0 | 1 |

In this embodiment of the present invention, when the first implementation is used, because the quantity of the to-be-allocated ports is increased, DRS orthogonal pilot allocation of a maximum of four streams of MUBF and DRS pseudo-orthogonal pilot allocation of a maximum of eight streams may be supported. There is no need to perform spatial multiplexing, and pilot interference between the UEs is reduced. In addition, a quantity of REs occupied by the to-be-allocated ports in one timeslot is still 12, and no extra RE resource is occupied compared with the prior art.

In a second implementation, the quantity of the OCCs is 4, and the quantity of the to-be-allocated ports is 8.

The to-be-allocated ports include original to-be-allocated ports, a port 7 and a port 8, and newly-added to-be-allocated ports from a port 11 to a port 14. Every four ports share a group of RE resources at a same location. For example, as shown in FIG. 5, the port 7, the port 8, the port 11, and the port 13 share an RE resource at a first location, and the port 9, the port 10, the port 12, and the port 14 share an RE resource at a second location. To-be-allocated ports that occupy an RE resource at a same location are distinguished by using different OCC mapping sequences. An OCC mapping sequence corresponding to each to-be-allocated port is shown in Table 6.

**Table 6**

| **To-be-allocated port number** | **OCC mapping sequence** |
|---|---|
| 7 | [+1 +1 +1 +1] |
| 8 | [+1 -1 +1 -1] |
| 9 | [+1 +1 +1 +1] |
| 10 | [+1 -1 +1 -1] |
| 11 | [+1 +1 -1 -1] |
| 12 | [-1 -1 +1 +1] |
| 13 | [+1 -1 -1 +1] |
| 14 | [-1 +1 +1 -1] |

When the quantity of the UEs is less than or equal to 8, the base station determines that the pilot allocation result is that each UE is corresponding to one to-be-allocated port, and N_{SCID} values corresponding to each to-be-allocated port are all 1 or are all 0.

It should be noted that, because the quantity of the to-be-allocated ports is the same as the quantity of the UEs, or the quantity of the to-be-allocated ports is greater than the quantity of the UEs, a pseudo-orthogonal pilot does not need to be used when MUBF pairing is performed on the UEs. That the quantity of the UEs is 8 is used as an example, and two pilot allocation results may be determined, as shown in Table 7 and Table 8.

**Table 7**

| UE number | 1 | 2 | 3 | 4 | 5 | 6 | 7 | 8 |
|---|---|---|---|---|---|---|---|---|
| To-be-allocated port number | 7 | 8 | 9 | 10 | 11 | 12 | 13 | 14 |
| N_{SCID} | 0 | 0 | 0 | 0 | 0 | 0 | 0 | 0 |

**Table 8**

| UE number | 1 | 2 | 3 | 4 | 5 | 6 | 7 | 8 |
|---|---|---|---|---|---|---|---|---|
| To-be-allocated port number | 7 | 8 | 9 | 10 | 11 | 12 | 13 | 14 |
| N_{SCID} | 1 | 1 | 1 | 1 | 1 | 1 | 1 | 1 |

When the quantity of the UEs is greater than 8, and is less than or equal to 16, the base station determines that the pilot allocation result is that each to-be-allocated port is corresponding to one or two UEs.

When each to-be-allocated port is corresponding to one UE, N_{SCID} values of each to-be-allocated port are all 1 or are all 0.

When each to-be-allocated port is corresponding to two UEs, N_{SCID} values of the same to-be-allocated port corresponding to the two UEs are respectively 0 and 1.

It should be noted that, because the quantity of the to-be-allocated ports is less than the quantity of the UEs, the pseudo-orthogonal pilot needs to be used when MUBF pairing is performed on the UEs. That the quantity of the UEs is 16 is used as an example, and two pilot allocation results may be determined, as shown in Table 9 and Table 10.

**Table 9**

| UE number | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| To-be-allocated port number | 7 | 8 | 9 | 10 | 11 | 12 | 13 | 14 | 7 | 8 | 9 | 10 | 11 | 12 | 13 | 14 |
| N_{SCID} | 0 | 0 | 0 | 0 | 0 | 0 | 0 | 0 | 1 | 1 | 1 | 1 | 1 | 1 | 1 | 1 |

**Table 10**

| UE number | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| To-be-allocated port number | 7 | 7 | 8 | 8 | 9 | 9 | 10 | 10 | 11 | 11 | 12 | 12 | 13 | 13 | 14 | 14 |
| N_{SCID} | 0 | 1 | 0 | 1 | 0 | 1 | 0 | 1 | 0 | 1 | 0 | 1 | 0 | 1 | 0 | 1 |

In this embodiment of the present invention, when the second implementation is used, because the quantity of the to-be-allocated ports is increased, DRS orthogonal pilot allocation of a maximum of eight streams of MUBF and DRS pseudo-orthogonal pilot allocation of a maximum of 16 streams may be supported. There is no need to perform spatial multiplexing, and pilot interference between the UEs is reduced.

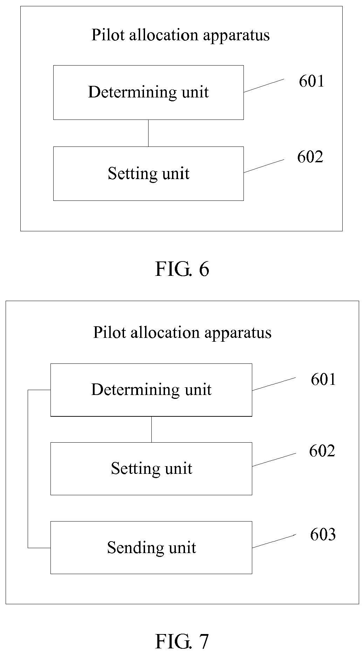

To reduce pilot interference between UEs (User Equipment, user equipment), an embodiment of the present invention provides a pilot allocation apparatus, and the apparatus is applied to a base station. As shown in FIG. 6, the apparatus includes a determining unit 601 and a setting unit 602.

The determining unit 601 is configured to determine UEs requiring MUBF pairing and to-be-allocated ports, where the to-be-allocated ports include two original pilot ports used for MUBF pairing and at least one newly-added pilot port used for MUBF pairing, and the MUBF pairing is to pair at least two UEs, so that the at least two UEs share a same time-frequency resource.

The setting unit 602 is configured to set a quantity of orthogonal cover codes OCCs according to a quantity of the to-be-allocated ports.

The determining unit 601 is further configured to determine a pilot allocation result according to the quantity of the to-be-allocated ports, the quantity of the OCCs, and a quantity of the UEs.

In another embodiment of the present invention, the base station includes downlink control information DCI, where the DCI includes a first field used to carry N_{SCID} and a second field used to carry to-be-allocated port number information having at least two bits, and the N_{SCID} is a pseudo random sequence generation seed of the to-be-allocated ports. As shown in FIG. 7, the apparatus further includes a sending unit 603.

The sending unit 603 is configured to: set the N_{SCID} in the first field of the DCI according to the pilot allocation result, set the to-be-allocated port number information in the second field of the DCI, and send the DCI to the UEs.

In another embodiment of the present invention, the determining unit 601 is further configured to: allocate a resource element RE resource to the to-be-allocated ports according to the quantity of the OCCs and the quantity of the to-be-allocated ports, where the quantity of the OCCs is a quantity of to-be-allocated ports that may occupy an RE resource at a same location; when the quantity of the UEs is less than or equal to a first preset value, determine that the pilot allocation result is that each UE is corresponding to one to-be-allocated port, and N_{SCID} values corresponding to each to-be-allocated port are the same; and when the quantity of the UEs is greater than the first preset value, and is less than or equal to a second preset value, determine that the pilot allocation result is that each to-be-allocated port is corresponding to one or two UEs, where when each to-be-allocated port is corresponding to one UE, N_{SCID} values of each to-be-allocated port are the same, and when each to-be-allocated port is corresponding to two UEs, N_{SCID} values of the same to-be-allocated port corresponding to the two UEs are different.

In another embodiment of the present invention, the quantity of the OCCs is 4, the quantity of the to-be-allocated ports is 4, and
the determining unit 601 is further configured to: allocate an RE resource at a first location to the to-be-allocated ports according to the OCCs; when the quantity of the UEs is less than or equal to 4, determine that the pilot allocation result is that each UE is corresponding to one to-be-allocated port, and N_{SCID} values corresponding to each to-be-allocated port are all 1 or are all 0; and when the quantity of the UEs is greater than 4, and is less than or equal to 8, determine that the pilot allocation result is that each to-be-allocated port is corresponding to one or two UEs, where when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.

In another embodiment of the present invention, the quantity of the OCCs is 4, the quantity of the to-be-allocated ports is 8, and
the determining unit 601 is further configured to: allocate an RE resource at a first location to four to-be-allocated ports of the eight to-be-allocated ports according to the OCCs, and allocate an RE resource at a second location to other four to-be-allocated ports; when the quantity of the UEs is less than or equal to 8, determine that the pilot allocation result is that each UE is corresponding to one to-be-allocated port, and N_{SCID} values corresponding to each to-be-allocated port are all 1 or are all 0; and when the quantity of the UEs is greater than 8, and is less than or equal to 16, determine that the pilot allocation result is that each to-be-allocated port is corresponding to one or two UEs, where when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.

According to the pilot allocation apparatus in this embodiment of the present invention, the determining unit determines the UEs requiring the MUBF pairing and the to-be-allocated ports, where the to-be-allocated ports may include the newly-added pilot port, then the setting unit sets the quantity of the OCCs according to the quantity of the to-be-allocated ports, and further the determining unit determines the pilot allocation result according to the quantity of the to-be-allocated ports, the quantity of the OCCs, and the quantity of the UEs. Compared with the prior art in which when a quantity of users exceeds 4, different users use a same signal in a spatial multiplexing manner, causing strong pilot interference, in this embodiment of the present invention, the newly-added port may also occupy, by setting the quantity of the OCCs, an RE resource used for pilot allocation, so that a quantity of pilot ports that may be allocated to the UEs is increased, different users may use different pilot ports, and pilot interference between the UEs is reduced.

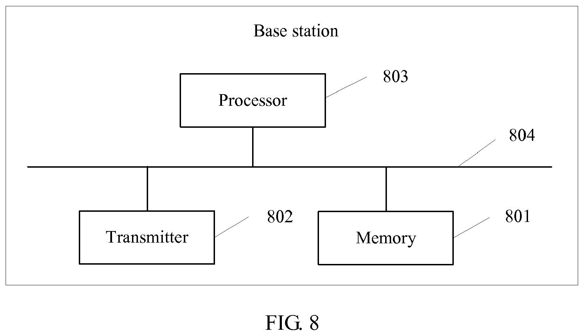

An embodiment of the present invention further provides a pilot allocation apparatus. As shown in FIG. 8, FIG. 8 is a schematic diagram of a hardware structure of the base station described in FIG. 6. The base station may include a memory 801, a transmitter 802, a processor 803, and a bus 804. The memory 801, the transmitter 802, and the processor 803 are communicatively connected by using the bus 804.

The memory 801 may be a read-only memory (Read Only Memory, ROM), a static storage device, a dynamic storage device, or a random access memory (Random Access Memory, RAM). The memory 801 may store an operating system and another application program. When the technical solution provided in this embodiment of the present invention is implemented by using software or firmware, program code used to implement the technical solution provided in this embodiment of the present invention is stored in the memory 801, and is executed by the processor 803.

The transmitter 802 is configured to implement communication between the apparatus and another device or a communications network (for example, without limitation, an Ethernet, a radio access network (Radio Access Network, RAN), a wireless local area network (Wireless Local Area Network, WLAN)).

The processor 803 may be a general-purpose central processing unit (Central Processing Unit, CPU), a microprocessor, an application-specific integrated circuit (Application Specific Integrated Circuit, ASIC), or one or more integrated circuits, and is configured to execute a related program, so as to implement the technical solution provided in this embodiment of the present invention.

The bus 804 may include a path for transmitting information between components (for example, the memory 801, the transmitter 802, and the processor 803) of the apparatus.

It should be noted that, although the hardware shown in FIG. 8 shows only the memory 801, the transmitter 802, the processor 803, and the bus 804, in a specific implementation process, a person skilled in the art should understand that the base station further includes another component required for implementing normal operation. In addition, depending on specific requirements, a person skilled in the art should understand that hardware components for implementing other functions may be further included.

Specifically, when the base station shown in FIG. 8 is configured to implement the apparatus shown in the embodiments in FIG. 6 and FIG. 7, the processor 803 in the apparatus is coupled to the memory 801 and the transmitter 802, is configured to control execution of a program instruction, and is specifically configured to: determine UEs requiring MUBF pairing and to-be-allocated ports, where the to-be-allocated ports include two original pilot ports used for MUBF pairing and at least one newly-added pilot port used for MUBF pairing, and the MUBF pairing is to pair at least two UEs, so that the at least two UEs share a same time-frequency resource; set a quantity of orthogonal cover codes OCCs according to a quantity of the to-be-allocated ports; and determine a pilot allocation result according to the quantity of the to-be-allocated ports, the quantity of the OCCs, and a quantity of the UEs.

The memory 801 is configured to store downlink control information DCI, where the DCI includes a first field used to carry N_{SCID} and a second field used to carry to-be-allocated port number information having at least two bits, and the N_{SCID} is a pseudo random sequence generation seed of the to-be-allocated ports.

The transmitter 802 is configured to: set the N_{SCID} in the first field of the DCI according to the pilot allocation result, set the to-be-allocated port number information in the second field of the DCI, and send the DCI to the UEs.

The processor 803 is further configured to: allocate a resource element RE resource to the to-be-allocated ports according to the quantity of the OCCs and the quantity of the to-be-allocated ports, where the quantity of the OCCs is a quantity of to-be-allocated ports that may occupy an RE resource at a same location; when the quantity of the UEs is less than or equal to a first preset value, determine that the pilot allocation result is that each UE is corresponding to one to-be-allocated port, and N_{SCID} values corresponding to each to-be-allocated port are the same; and when the quantity of the UEs is greater than the first preset value, and is less than or equal to a second preset value, determine that the pilot allocation result is that each to-be-allocated port is corresponding to one or two UEs, where when each to-be-allocated port is corresponding to one UE, N_{SCID} values of each to-be-allocated port are the same, and when each to-be-allocated port is corresponding to two UEs, N_{SCID} values of the same to-be-allocated port corresponding to the two UEs are different.

When the quantity of the OCCs is 4, and the quantity of the to-be-allocated ports is 4, the processor 803 is further configured to: allocate an RE resource at a first location to the to-be-allocated ports according to the OCCs; when the quantity of the UEs is less than or equal to 4, determine that the pilot allocation result is that each UE is corresponding to one to-be-allocated port, and N_{SCID} values corresponding to each to-be-allocated port are all 1 or are all 0; and when the quantity of the UEs is greater than 4, and is less than or equal to 8, determine that the pilot allocation result is that each to-be-allocated port is corresponding to one or two UEs, where when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.

When the quantity of the OCCs is 4, and the quantity of the to-be-allocated ports is 4, the processor 803 is further configured to: allocate an RE resource at a first location to four to-be-allocated ports of the eight to-be-allocated ports according to the OCCs, and allocate an RE resource at a second location to other four to-be-allocated ports; when the quantity of the UEs is less than or equal to 8, determine that the pilot allocation result is that each UE is corresponding to one to-be-allocated port, and N_{SCID} values corresponding to each to-be-allocated port are all 1 or are all 0; and when the quantity of the UEs is greater than 8, and is less than or equal to 16, determine that the pilot allocation result is that each to-be-allocated port is corresponding to one or two UEs, where when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.

According to the pilot allocation apparatus in this embodiment of the present invention, the processor determines the UEs requiring the MUBF pairing and the to-be-allocated ports, where the to-be-allocated ports may include the newly-added pilot port, then sets the quantity of the OCCs according to the quantity of the to-be-allocated ports, and further determines the pilot allocation result according to the quantity of the to-be-allocated ports, the quantity of the OCCs, and the quantity of the UEs. Compared with the prior art in which when a quantity of users exceeds 4, different users use a same signal in a spatial multiplexing manner, causing strong pilot interference, in this embodiment of the present invention, the newly-added port may also occupy, by setting the quantity of the OCCs, an RE resource used for pilot allocation, so that a quantity of pilot ports that may be allocated to the UEs is increased, different users may use different pilot ports, and pilot interference between the UEs is reduced.

Based on the foregoing descriptions of the implementations, a person skilled in the art may clearly understand that the present invention may be implemented by software in addition to necessary universal hardware or by hardware only. In most circumstances, the former is a preferred implementation. Based on such an understanding, the technical solutions of the present invention essentially or the part contributing to the prior art may be implemented in a form of a software product. The software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A pilot allocation method, comprising:
determining, by a base station, UEs requiring MUBF pairing and to-be-allocated ports, wherein the to-be-allocated ports comprise two original pilot ports used for MUBF pairing and at least one newly-added pilot port used for MUBF pairing;
setting, by the base station, a quantity of orthogonal cover codes OCCs according to a quantity of the to-be-allocated ports; and
determining, by the base station, a pilot allocation result according to the quantity of the to-be-allocated ports, the quantity of the OCCs, and a quantity of the UEs.

2. The pilot allocation method according to claim 1, wherein the base station comprises downlink control information DCI, wherein the DCI comprises a first field used to carry N_{SCID} and a second field used to carry to-be-allocated port number information having at least two bits, and the N_{SCID} is a pseudo random sequence generation seed of the to-be-allocated ports;
after the determining, by the base station, a pilot allocation result according to the quantity of the to-be-allocated ports, the quantity of the OCCs, and a quantity of the UEs, the method further comprises:
setting, by the base station, the N_{SCID} in the first field of the DCI according to the pilot allocation result, setting the to-be-allocated port number information in the second field of the DCI, and sending the DCI to the UEs.

3. The pilot allocation method according to claim 1 or 2, wherein the determining, by the base station, a pilot allocation result according to the quantity of the to-be-allocated ports, the quantity of the OCCs, and a quantity of the UEs comprises:
allocating, by the base station, a resource element RE resource to the to-be-allocated ports according to the quantity of the OCCs and the quantity of the to-be-allocated ports, wherein the quantity of the OCCs is a quantity of to-be-allocated ports that may occupy an RE resource at a same location;
when the quantity of the UEs is less than or equal to a first preset value, determining, by the base station, that the pilot allocation result is that each UE is corresponding to one to-be-allocated port, and N_{SCID} values corresponding to each to-be-allocated port are the same; and
when the quantity of the UEs is greater than the first preset value, and is less than or equal to a second preset value, determining, by the base station, that the pilot allocation result is that each to-be-allocated port is corresponding to one or two UEs, wherein
when each to-be-allocated port is corresponding to one UE, N_{SCID} values of each to-be-allocated port are the same, and
when each to-be-allocated port is corresponding to two UEs, N_{SCID} values of the same to-be-allocated port corresponding to the two UEs are different.

4. The pilot allocation method according to claim 3, wherein the quantity of the OCCs is 4, the quantity of the to-be-allocated ports is 4, and the determining, by the base station, a pilot allocation result according to the quantity of the to-be-allocated ports, the quantity of the OCCs, and a quantity of the UEs comprises:
allocating, by the base station, an RE resource at a first location to the to-be-allocated ports according to the OCCs;
when the quantity of the UEs is less than or equal to 4, determining, by the base station, that the pilot allocation result is that each UE is corresponding to one to-be-allocated port, and N_{SCID} values corresponding to each to-be-allocated port are all 1 or are all 0; and
when the quantity of the UEs is greater than 4, and is less than or equal to 8, determining, by the base station, that the pilot allocation result is that each to-be-allocated port is corresponding to one or two UEs, wherein
when each to-be-allocated port is corresponding to one UE, N_{SCID} values of each to-be-allocated port are all 1 or are all 0, and
when each to-be-allocated port is corresponding to two UEs, N_{SCID} values of the same to-be-allocated port corresponding to the two UEs are respectively 0 and 1.

5. The pilot allocation method according to claim 3, wherein the quantity of the OCCs is 4, the quantity of the to-be-allocated ports is 8, and the determining, by the base station, a pilot allocation result according to the quantity of the newly-added to-be-allocated ports, the quantity of the OCCs, and a quantity of the UEs comprises:
allocating, by the base station, an RE resource at a first location to four to-be-allocated ports of the eight to-be-allocated ports according to the OCCs, and allocating an RE resource at a second location to other four to-be-allocated ports;
when the quantity of the UEs is less than or equal to 8, determining, by the base station, that the pilot allocation result is that each UE is corresponding to one to-be-allocated port, and N_{SCID} values corresponding to each to-be-allocated port are all 1 or are all 0; and
when the quantity of the UEs is greater than 8, and is less than or equal to 16, determining, by the base station, that the pilot allocation result is that each to-be-allocated port is corresponding to one or two UEs, wherein
when each to-be-allocated port is corresponding to one UE, N_{SCID} values of each to-be-allocated port are all 1 or are all 0, and
when each to-be-allocated port is corresponding to two UEs, N_{SCID} values of the same to-be-allocated port corresponding to the two UEs are respectively 0 and 1.

6. A pilot allocation apparatus, wherein the apparatus is applied to a base station, and the apparatus comprises:
a determining unit, configured to determine UEs requiring MUBF pairing and to-be-allocated ports, wherein the to-be-allocated ports comprise two original pilot ports used for MUBF pairing and at least one newly-added pilot port used for MUBF pairing; and
a setting unit, configured to set a quantity of orthogonal cover codes OCCs according to a quantity of the to-be-allocated ports, wherein
the determining unit is further configured to determine a pilot allocation result according to the quantity of the to-be-allocated ports, the quantity of the OCCs, and a quantity of the UEs.

7. The pilot allocation apparatus according to claim 6, wherein the base station comprises downlink control information DCI, wherein the DCI comprises a first field used to carry N_{SCID} and a second field used to carry to-be-allocated port number information having at least two bits, and the N_{SCID} is a pseudo random sequence generation seed of the to-be-allocated ports; and the apparatus further comprises a sending unit, wherein
the sending unit is configured to: set the N_{SCID} in the first field of the DCI according to the pilot allocation result, set the to-be-allocated port number information in the second field of the DCI, and send the DCI to the UEs.

8. The pilot allocation apparatus according to claim 6 or 7, wherein
the determining unit is further configured to: allocate a resource element RE resource to the to-be-allocated ports according to the quantity of the OCCs and the quantity of the to-be-allocated ports, wherein the quantity of the OCCs is a quantity of to-be-allocated ports that may occupy an RE resource at a same location; when the quantity of the UEs is less than or equal to a first preset value, determine that the pilot allocation result is that each UE is corresponding to one to-be-allocated port, and N_{SCID} values corresponding to each to-be-allocated port are the same; and when the quantity of the UEs is greater than the first preset value, and is less than or equal to a second preset value, determine that the pilot allocation result is that each to-be-allocated port is corresponding to one or two UEs, wherein when each to-be-allocated port is corresponding to one UE, N_{SCID} values of each to-be-allocated port are the same, and when each to-be-allocated port is corresponding to two UEs, N_{SCID} values of the same to-be-allocated port corresponding to the two UEs are different.

9. The pilot allocation apparatus according to claim 8, wherein the quantity of the OCCs is 4, the quantity of the to-be-allocated ports is 4, and
the determining unit is further configured to: allocate an RE resource at a first location to the to-be-allocated ports according to the OCCs; when the quantity of the UEs is less than or equal to 4, determine that the pilot allocation result is that each UE is corresponding to one to-be-allocated port, and N_{SCID} values corresponding to each to-be-allocated port are all 1 or are all 0; and when the quantity of the UEs is greater than 4, and is less than or equal to 8, determine that the pilot allocation result is that each to-be-allocated port is corresponding to one or two UEs, wherein when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.

10. The pilot allocation apparatus according to claim 8, wherein the quantity of the OCCs is 4, the quantity of the to-be-allocated ports is 8, and
the determining unit is further configured to: allocate an RE resource at a first location to four to-be-allocated ports of the eight to-be-allocated ports according to the OCCs, and allocate an RE resource at a second location to other four to-be-allocated ports; when the quantity of the UEs is less than or equal to 8, determine that the pilot allocation result is that each UE is corresponding to one to-be-allocated port, and N_{SCID} values corresponding to each to-be-allocated port are all 1 or are all 0; and when the quantity of the UEs is greater than 8, and is less than or equal to 16, determine that the pilot allocation result is that each to-be-allocated port is corresponding to one or two UEs, wherein when each to-be-allocated port is corresponding to one UE, N_{SCID} values of each to-be-allocated port are all 1 or are all 0, and when each to-be-allocated port is corresponding to two UEs, N_{SCID} values of the same to-be-allocated port corresponding to the two UEs are respectively 0 and 1.
